# EUROPEAN PATENT APPLICATION

(11) **EP 4 365 526 A1**
(43) Date of publication of application: **08.05.2024**
(21) Application number: 21947899.7
(22) Date of filing: 23.09.2021
(51) Int. Cl.: F25J 1/02

(54) **HYDROGEN LIQUEFACTION SYSTEM**

(30) Priority: 01.07.2021 CN 202110746401
(71) Applicant: Technical Institute of Physics and Chemistry, Chinese Academy of Sciences, Beijing 100190 (CN)
(72) Inventor: XIE, Xiujuan, Beijing 100190 (CN); YANG, Shaoqi, Beijing 100190 (CN); ZHOU, Gang, Beijing 100190 (CN); XUE, Rui, Beijing 100190 (CN); PAN, Wei, Beijing 100190 (CN); GONG, Linghui, Beijing 100190 (CN)
(74) Representative: Lin Chien, Mon-Yin
(86) International application number: PCT/CN2021/119904
(87) International publication number: WO 2023/272971

(57) **Abstract**

The present disclosure relates to a hydrogen liquefaction system, which includes a ambient temperature compressor assembly, a hydrogen liquefaction unit and a liquid hydrogen cryogenic container, the outlet of the ambient temperature compressor assembly is communicated with a first inlet of the hydrogen liquefaction unit via a high-pressure gas pipeline; the medium-pressure gas pipeline and the low-pressure gas pipeline are passed through the liquid hydrogen liquefaction unit; the hydrogen liquefaction unit is configured to cool and liquefy the high-pressure hydrogen gas output from the ambient temperature compressor assembly into liquid hydrogen; the liquid hydrogen output from the first outlet of the hydrogen liquefaction unit can enter the liquid hydrogen cryogenic container via the first inlet of the liquid hydrogen cryogenic container for storage.

## Description

### TECHNICAL FIELD

The present disclosure relates to the technical field of low-temperature refrigeration, in particular to a hydrogen liquefaction system.

### BACKGROUND

Liquid hydrogen has high hydrogen storage density, which can greatly improve transportation efficiency, reduce storage and transportation pressure and improve system safety. It is the best solution for hydrogen ocean transportation and flexible land transportation in middle and long distances, and is further the first choice of hydrogen storage mode for commercial hydrogen refueling stations, with obvious advantages in capacity scale and cost.

The hydrogen liquefier is the main device in liquid hydrogen production, which is used to refrigerate and liquefy hydrogen at ambient temperature. It is the core technical apparatus in high-tech industries such as aerospace, hydrogen energy storage and transportation. The conventional hydrogen liquefier generally takes helium as the circulating working gas, but the hydrogen liquefaction capacity of the hydrogen liquefier with helium as the circulating working gas is generally insufficient, which makes it difficult for the hydrogen liquefier to meet the output requirements of hydrogen liquefaction capacity which is more than 5 tons per day.

### SUMMARY

Thus, the present disclosure provides a hydrogen liquefaction system effectively improving the hydrogen liquefaction capability.

A hydrogen liquefaction system comprises a ambient temperature compressor assembly, a hydrogen liquefaction unit and a liquid hydrogen cryogenic container, an outlet of the ambient temperature compressor assembly being communicated with a first inlet of the hydrogen liquefaction unit via a high-pressure gas pipeline, a first outlet of the hydrogen liquefaction unit being communicated with a first inlet of the liquid hydrogen cryogenic container, the first outlet of the hydrogen liquefaction unit being configured to outflow liquid hydrogen, the first outlet of the liquid hydrogen cryogenic container being communicated with a second inlet of the hydrogen liquefaction unit, the first outlet of the liquid hydrogen cryogenic container being configured to outflow 20K saturated hydrogen, a second outlet of the hydrogen liquefaction unit being communicated with the first inlet of the ambient temperature compressor assembly via a medium-pressure gas pipeline, a third outlet of the hydrogen liquefaction unit being communicated with the second inlet of the ambient temperature compressor assembly via a low-pressure gas pipeline, the high-pressure gas pipeline, the medium-pressure gas pipeline and the low-pressure gas pipeline being penetrated via the hydrogen liquefaction unit, the third inlet of the hydrogen liquefaction unit being configured to inflow of raw hydrogen, a fourth outlet of the hydrogen liquefaction unit being communicated with the second inlet of the liquid hydrogen cryogenic container, and a fourth outlet of the hydrogen liquefaction unit being configured to outflow of liquid hydrogen.

The ambient temperature compressor assembly provides a power source for a hydrogen liquefaction system to realize the pressurization process of hydrogen from low-pressure to medium-pressure and from medium-pressure to high-pressure. The hydrogen liquefaction unit is configured to cool and liquefy the high-pressure hydrogen gas output from the ambient temperature compressor assembly into liquid hydrogen. The liquid hydrogen output from the first outlet of the hydrogen liquefaction unit can enter the liquid hydrogen cryogenic container via the first inlet of the liquid hydrogen cryogenic container for storage. The 20K saturated hydrogen can flow into the second inlet of the hydrogen liquefaction unit from the first outlet of the liquid hydrogen cryogenic container, and then flow into the second inlet of the ambient temperature compressor assembly from the third outlet of the hydrogen liquefaction unit via the low-pressure gas pipeline to complete one whole cycle. Raw hydrogen can enter the hydrogen liquefaction unit from the third inlet of the hydrogen liquefaction unit, then be cooled by the hydrogen liquefaction unit to generate liquid hydrogen, then flow out from the fourth outlet of the hydrogen liquefaction unit and enter the liquid hydrogen cryogenic container via the second inlet of the liquid hydrogen cryogenic container for storage.

In one embodiment, further comprises a gas management subsystem. The gas management subsystem is disposed between the ambient temperature compressor assembly and the hydrogen liquefaction unit, and the gas management subsystem comprises a pneumatic regulating valve assembly in parallel with the ambient temperature compressor assembly.

In one embodiment, the ambient temperature compressor assembly is one single-stage compressor, one multi-stage compressor, two single-stage compressors in series, or a plurality of single-stage compressors in series and parallel combination.

In one embodiment, the hydrogen liquefaction unit comprises a combination of an heat exchanger assembly and a turbo-expander assembly.

In one embodiment, the heat exchanger assembly is filled with an ortho-parahydrogen catalyst, or the heat exchanger assembly is connected with an ortho-parahydrogen converter.

In one embodiment, the hydrogen liquefaction unit further comprises a cryogenic working gas precooling subsystem connected to the following heat exchanger assembly.

In one embodiment, the hydrogen liquefaction unit is a hydrogen liquefaction unit based on a Claude cycle. The heat exchanger assembly comprises a first cryogenic heat exchanger, a second cryogenic heat exchanger, a third cryogenic heat exchanger, a fourth cryogenic heat exchanger, a fifth cryogenic heat exchanger, a sixth cryogenic heat exchanger and a seventh cryogenic heat exchanger connected in parallel and in sequence. The fifth cryogenic heat exchanger is provided with a cryogenic working gas inlet and a cryogenic working gas outlet. The turbo-expander assembly comprises a primary hydrogen turbo-expander and a secondary hydrogen turbo-expander, the inlet of the primary hydrogen turbo-expander is disposed on a supply pipeline from the third cryogenic heat exchanger to the fourth cryogenic heat exchanger, and the outlet of the primary hydrogen turbo-expander is communicated with the cryogenic working gas inlet of the fifth cryogenic heat exchanger. The inlet of the secondary hydrogen turbo-expander is communicated with the cryogenic working gas outlet of the fifth cryogenic heat exchanger, and the outlet of the secondary hydrogen turbo-expander is disposed on a return pipeline from the sixth cryogenic heat exchanger to the second inlet of the ambient temperature compressor assembly.

In one embodiment, the hydrogen liquefaction unit is a hydrogen liquefaction unit based on a Collins cycle. The heat exchanger assembly comprises a first cryogenic heat exchanger, a second cryogenic heat exchanger, a third cryogenic heat exchanger, a fourth cryogenic heat exchanger, a fifth cryogenic heat exchanger, a sixth cryogenic heat exchanger and a seventh cryogenic heat exchanger-connected in parallel and in sequence. The turbo-expander assembly comprises a primary hydrogen turbo-expander and a secondary hydrogen turbo-expander, the inlet of the primary hydrogen turbo-expander is disposed on the supply pipeline from the third cryogenic heat exchanger to the fourth cryogenic heat exchanger, and the outlet of the primary hydrogen turbo-expander is disposed on the pipeline from the fifth cryogenic heat exchanger to the fourth cryogenic heat exchanger returned to the second inlet of the ambient temperature compressor assembly. The inlet of the secondary hydrogen turbo-expander is disposed on the supply pipeline from the fifth cryogenic heat exchanger to the sixth cryogenic heat exchanger, and the outlet of the secondary hydrogen turbo-expander is disposed on the return pipeline from the sixth cryogenic heat exchanger to the second inlet of the ambient temperature compressor assembly.

In one embodiment, further comprises a first rapid cooling pipeline connected to the heat exchanger assembly, and/or a second rapid cooling pipeline connected to the heat exchanger assembly and the liquid hydrogen cryogenic container.

In one embodiment, the liquid hydrogen cryogenic container is provided with a heater therein.

Compared with the related art, the embodiment of the present disclosure has the beneficial effect that the hydrogen liquefaction system provided by the present disclosure can generate liquid hydrogen together with the hydrogen liquefaction pipeline of the hydrogen liquefaction system by arranging a hydrogen circulating pipeline and taking hydrogen as a circulating working gas, so that the hydrogen liquefaction capacity of the hydrogen liquefaction system can be greatly improved and the production requirement of more than 5 tons per day of hydrogen liquefaction capacity can be met.

### BRIEF DESCRIPTION OF THE DRAWINGS

Fig. 1 is a schematic structural view of a hydrogen liquefaction system in an embodiment of the present disclosure.
Fig. 2 is a schematic structural view of a hydrogen liquefaction system in another embodiment of the present disclosure.
Fig. 3 is a schematic structural view of a hydrogen liquefaction system in another embodiment of the present disclosure.
Fig. 4 is a schematic structural view of a hydrogen liquefaction system in another embodiment of the present disclosure.

### DETAILED DESCRIPTION OF THE EMBODIMENTS

For ease of understanding the present disclosure a more complete description of the present disclosure will be given below with reference to the associated drawings. The preferred embodiments of the present disclosure are given in the drawings. However, the present disclosure can be implemented in many different forms and is not limited to the embodiments described herein. Rather these embodiments are provided for a more thorough understanding of the disclosure of the present disclosure.

It should be noted that when an element is defined as "fixed to" another element, it can be directly on the other element or there can further be a centered element. When an element is considered to be "connected to" another element, it can be directly connected to the other element or can be accompanied by a centered element.

Unless otherwise defined all technical and scientific terms used herein have the same meaning as would normally be understood by those skilled in the art of the present disclosure. Terms used herein in the specification of the present disclosure are for the purpose of describing specific embodiments only and are not intended to limit the present disclosure.

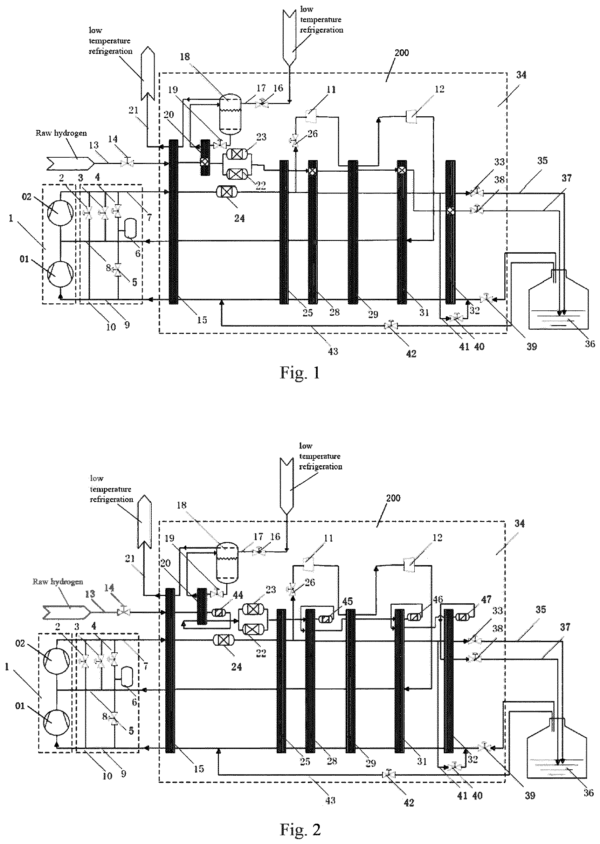

As shown in Fig. 1, a hydrogen liquefaction system of one embodiment comprises an ambient temperature compressor assembly 1, a hydrogen liquefaction unit 200 and a liquid hydrogen cryogenic container 36. The outlet of the ambient temperature compressor assembly 1 is communicated with the first inlet of the hydrogen liquefaction unit 200 via a high-pressure gas pipeline 7, the first outlet of the hydrogen liquefaction unit 200 is communicated with the first inlet of the liquid hydrogen cryogenic container 36, and the first outlet of the liquid hydrogen cryogenic container 36 is communicated with the second inlet of the hydrogen liquefaction unit 200. The first outlet of the liquid hydrogen cryogenic container 36 is to outflow the 20K saturated hydrogen, the second outlet of the hydrogen liquefaction unit 200 is communicated with the first inlet of the ambient temperature compressor assembly 1 via a medium-pressure gas pipeline 8, and the third outlet of the hydrogen liquefaction unit 200 is communicated with the second inlet of the ambient temperature compressor assembly 1 via a low-pressure gas pipeline 9. The third inlet of the hydrogen liquefaction unit 200 is configured to inflow of raw hydrogen, a fourth outlet of the hydrogen liquefaction unit 200 is communicated with a second inlet of the liquid hydrogen cryogenic container 36, and a fourth outlet of the hydrogen liquefaction unit 200 is configured to outflow of liquid hydrogen.

In the hydrogen liquefaction system provided by the present disclosure, the ambient temperature compressor assembly 1 provides a power source for the hydrogen liquefaction system, and realizes the pressurization process of hydrogen from low-pressure to medium-pressure and from medium-pressure to high-pressure. The hydrogen liquefaction unit 200 liquefies the high-pressure hydrogen gas output from the ambient temperature compressor assembly 1 into liquid hydrogen, and the liquid hydrogen output from the first outlet of the hydrogen liquefaction unit 200 enters the liquid hydrogen cryogenic container 36 via the first inlet of the liquid hydrogen cryogenic container 36 for storage. The 20K saturated hydrogen flows from the first outlet of the liquid hydrogen cryogenic container 36 to the second inlet of the hydrogen liquefaction unit 200, and then flows from the third outlet of the hydrogen liquefaction unit 200 to the second inlet of the ambient temperature compressor assembly 1 via the low-pressure gas pipeline 9 to complete the whole cycle. At the same time, the raw hydrogen enters the hydrogen liquefaction unit 200 from the third inlet of the hydrogen liquefaction unit 200, then cools down via the hydrogen liquefaction unit 200 to generate liquid hydrogen, then flows out from the fourth outlet of the hydrogen liquefaction unit 200 and enters the liquid hydrogen cryogenic container 36 via the second inlet of the liquid hydrogen cryogenic container 36 for storage.

The embodiment of the present disclosure has the beneficial effect that the hydrogen liquefaction system provided by the present disclosure can generate liquid hydrogen together with the hydrogen liquefaction pipeline of the hydrogen liquefaction system by arranging a hydrogen circulating pipeline and taking hydrogen as a circulating working substance, so that the hydrogen liquefaction capacity of the hydrogen liquefaction system can be greatly improved and the production requirement of more than 5 tons per day of hydrogen liquefaction capacity can be met.

In one embodiment, the ambient temperature compressor assembly 1 is one single-stage compressor, one multi-stage compressor, two single-stage compressors in series, or a plurality of single-stage compressors in series and parallel combination. Specifically, both the single-stage compressor and the multi-stage compressor can be a reciprocating piston compressor, a twin-screw hydrogen compressor or a centrifugal compressor.

As shown in Fig. 1, in a specific embodiment, the ambient temperature compressor assembly 1 comprises a first compressor 01 and a second compressor 02 connected in series. Specifically, an outlet of the first compressor 01 is communicated with an inlet of the second compressor 02, the outlet of the second compressor 02 is communicated with the first inlet of the hydrogen liquefaction unit 200 via a high-pressure gas pipeline 7, and the second outlet of the hydrogen liquefaction unit 200 is connected between the first compressor 01 and the second compressor 02 via a medium-pressure gas pipeline 8. The third outlet of the hydrogen liquefaction unit 200 is communicated with an inlet of the first compressor 01 via a low-pressure gas pipeline 9.

In an embodiment, the hydrogen liquefaction system further comprises a gas management subsystem 10 disposed between the ambient temperature compressor assembly 1 and the hydrogen liquefaction unit 200, and the gas management subsystem 10 comprises a pneumatic regulating valve assembly in parallel with the ambient temperature compressor assembly 1. The gas management subsystem 10 effectively controls the opening degrees of the valves thereof via a control program, thereby stabilizing the hydrogen pressure in the high-pressure gas pipeline 7, the medium-pressure gas pipeline 8, and the low-pressure gas pipeline 9 between the ambient temperature compressor assembly 1 and the hydrogen liquefaction unit 200.

As shown in Fig. 1, when the ambient temperature compressor assembly 1 is a combination of a first compressor 01 and a second compressor 02 in series, the gas management subsystem 10 comprises a first pipeline connected in parallel with the outlet of the first compressor 01 and the inlet of the second compressor 02, a second pipeline connected in parallel with the outlet of the first compressor 01 and the inlet of the first compressor 01, and a third pipeline connected in parallel with the outlet of the first compressor 01 and the inlet of the second compressor 02. The first pipeline is provided with a first valve 2, the second pipeline is provided with a second valve 3, the third pipeline is provided with a third valve 4, a fourth valve 5, and a hydrogen buffer tank 6 disposed between the third valve 4 and the fourth valve 5.

Specifically, the gas management subsystem 10 effectively controls the opening degrees of the first valve 2, the second valve 3, the third valve 4, and the fourth valve 5 via a control program, thereby stabilizing the hydrogen pressure of the high-pressure gas pipeline 7, the medium-pressure gas pipeline 8, and the low-pressure gas pipeline 9 between the ambient temperature compressor assembly 1 and the hydrogen liquefaction unit 200.

In one embodiment, the hydrogen liquefaction unit 200 comprises a combination of a heat exchanger assembly and a turbo-expander assembly. Specifically, the high-pressure hydrogen gas output from the ambient temperature compressor assembly 1 is cooled by heat exchange of the heat exchanger assembly and combined with adiabatic expansion refrigeration of the turbo-expander assembly to generate liquid hydrogen.

As shown in Figs. 1 and 2, the hydrogen liquefaction unit 200 is a hydrogen liquefaction unit based on a Claude cycle. The heat exchanger assembly comprises a first cryogenic heat exchanger 15, a second cryogenic heat exchanger 20, a third cryogenic heat exchanger 25, a fourth cryogenic heat exchanger 28, a fifth cryogenic heat exchanger 29, a sixth cryogenic heat exchanger 31 and a seventh cryogenic heat exchanger 32 connected in parallel in sequence. The fifth cryogenic heat exchanger 29 is provided with a cryogenic working gas inlet and a cryogenic working gas outlet. The turbo-expansion unit comprises a primary hydrogen turbo-expander 11 and a secondary hydrogen turbo-expander 12. The inlet of the primary hydrogen turbo-expander 11 is disposed on the supply pipeline from the third cryogenic heat exchanger 25 to the fourth cryogenic heat exchanger 28. The outlet of the primary hydrogen turbo-expander 11 is communicated with the cryogenic working gas inlet of the fifth cryogenic heat exchanger 29. The inlet of the secondary hydrogen turbo-expander 12 is communicated with the low-temperature working gas outlet of the fifth cryogenic heat exchanger 29, and the outlet of the secondary hydrogen turbo-expander 12 is disposed on the return pipeline from the sixth cryogenic heat exchanger 31 to the second inlet of the ambient temperature compressor assembly 1.

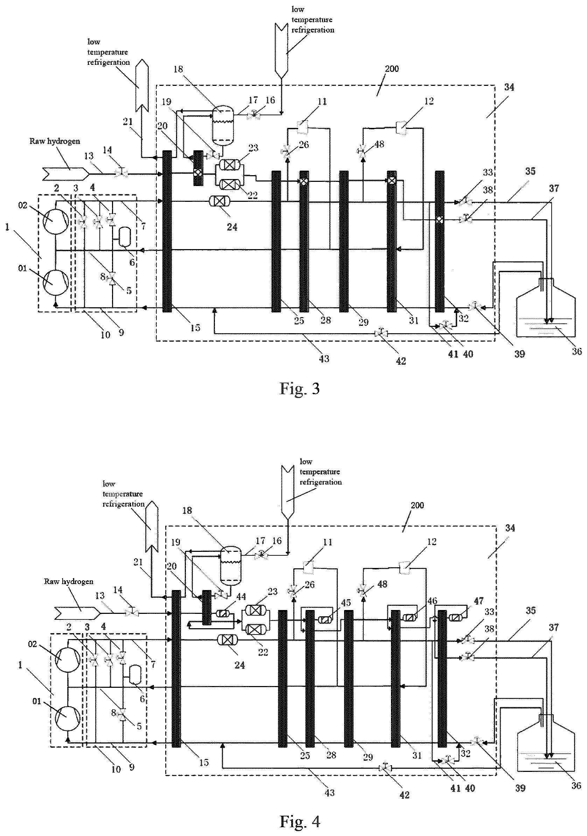

As shown in Figs. 3 and 4, the hydrogen liquefaction unit 200 is a hydrogen liquefaction unit based on a Collins cycle. The heat exchanger assembly comprises a first cryogenic heat exchanger 15, a second cryogenic heat exchanger 20, a third cryogenic heat exchanger 25, a fourth cryogenic heat exchanger 28, a fifth cryogenic heat exchanger 29, a sixth cryogenic heat exchanger 31 and a seventh cryogenic heat exchanger 32 connected in parallel in sequence. The turbo-expander assembly comprises a primary hydrogen turbo-expander 11 and a secondary hydrogen turbo-expander 12, the inlet of the primary hydrogen turbo-expander 11 is disposed on the supply pipeline from the third cryogenic heat exchanger 25 to the fourth cryogenic heat exchanger 28, and the outlet of the primary hydrogen turbo-expander 11 is disposed on the pipeline from the fifth cryogenic heat exchanger 29 to the fourth cryogenic heat exchanger 28 returned to the second inlet of the ambient temperature compressor assembly 1. The inlet of the secondary hydrogen turbo-expander 12 is disposed on the supply pipeline from the fifth cryogenic heat exchanger 29 to the sixth cryogenic heat exchanger 31, and the outlet of the secondary hydrogen turbo-expander 12 is disposed on the return pipeline from the sixth cryogenic heat exchanger 31 to the second inlet of the ambient temperature compressor assembly 1.

In one embodiment, the first cryogenic heat exchanger 15 can be an aluminum plate-fin heat exchanger, and it can be understood that the second cryogenic heat exchanger 20, the third cryogenic heat exchanger 25, the fourth cryogenic heat exchanger 28, the fifth cryogenic heat exchanger 29, the sixth cryogenic heat exchanger 31 and the seventh cryogenic heat exchanger 32 can all be aluminum plate-fin heat exchanger.

In one embodiment, the heat exchanger assembly is filled with ortho-parahydrogen catalyst, or the heat exchanger assembly is connected with an attached ortho-parahydrogen converter. Specifically, after the feed hydrogen is cooled by heat exchange of the heat exchanger assembly, the feed hydrogen is converted into high-purity liquid hydrogen with a parahydrogen concentration not less than 99% by continuous parahydrogen conversion of parahydrogen catalyst filled in the heat exchanger assembly or adiabatic parahydrogen conversion of the parahydrogen converter.

As shown in Figs. 1 and 2, specifically, in a case where the hydrogen liquefaction unit 200 is a hydrogen liquefaction unit based on a Claude cycle, the second cryogenic heat exchanger 20, the fourth cryogenic heat exchanger 28, the sixth cryogenic heat exchanger 31, and the seventh cryogenic heat exchanger 32 are filled with ortho-parahydrogen catalysts.

As shown in Figs. 3 and 4, specifically, in a case where the hydrogen liquefaction unit 200 is a hydrogen liquefaction unit based on a Collins cycle, a first ortho-parahydrogen converter 44, a second ortho-parahydrogen converter 45, a third ortho-parahydrogen converter 46, and a fourth ortho-parahydrogen converter 47 are respectively provided in the supply pipelines of the second cryogenic heat exchanger 20 to the third cryogenic heat exchanger 25, the supply pipelines of the fourth cryogenic heat exchanger 28 to the fifth cryogenic heat exchanger 29, the supply pipelines of the sixth cryogenic heat exchanger 31 to the seventh cryogenic heat exchanger 32, and the supply pipelines of the seventh cryogenic heat exchanger 32 to the second inlet of the liquid hydrogen cryogenic container 36.

As shown in Fig. 1, in one embodiment, the primary hydrogen turbo-expander 11 is provided with a turbo-path regulating valve 26 at the front end of the inlet.

With reference to Figs. 1-4, in one embodiment, the hydrogen liquefaction unit 200 further comprises a cryogenic working gas precooling subsystem 18 connected to the heat exchanger assembly for precooling the feed hydrogen gas and the high-pressure hydrogen gas output from the ambient temperature compressor assembly 1. In one embodiment, the cryogenic working gas can be liquid nitrogen and mixed working gas.

In one embodiment, a first inlet of the cryogenic working gas precooling subsystem 18 is configured to inflow of cryogenic working gas, a first outlet of the cryogenic working gas precooling subsystem 18 is communicated with the cryogenic working gas inlet of the first cryogenic heat exchanger 15. The cryogenic working gas outlet of the first cryogenic heat exchanger 15 is configured to outflow of cryogenic working gas, the second outlet of the cryogenic working gas precooling subsystem 18 is communicated with the cryogenic working gas inlet of the second cryogenic heat exchanger 20, and the cryogenic working gas outlet of the second cryogenic heat exchanger 20 is communicated with the second inlet of the cryogenic working gas precooling subsystem 18.

In one embodiment, the hydrogen liquefaction unit 200 further comprises a cold box 34, in which the heat exchanger assembly and the turbo-expansion unit are disposed. Specifically, the cold box 34 is a cryogenic container with a vacuum interlayer, and the cold box 34 can be a linear horizontal cold box or an L-shaped horizontal cold box.

In one embodiment, the hydrogen liquefaction system further comprises a first cryogenic working gas transfer pipeline 17 connected to a first inlet of the cryogenic working gas precooling subsystem 18. Further, the first cryogenic working gas transmission pipeline 17 is provided with a first regulating valve 16, and the first regulating valve 16 is configured to control the on-off of the first cryogenic working gas transmission pipeline 17. In one embodiment, the hydrogen liquefaction system further comprises a second cryogenic working gas transmission pipeline 21, which is connected to the cryogenic working gas outlet of the first cryogenic heat exchanger 15.

Further, the hydrogen liquefaction system further comprises a third cryogenic working gas transmission pipeline, the second outlet of the cryogenic working gas precooling subsystem 18 is communicated with the cryogenic working gas inlet of the second cryogenic heat exchanger 20 via the third cryogenic working gas transmission pipeline, and a second regulating valve 19 is disposed on the third cryogenic working gas transmission pipeline, and the second regulating valve 19 is configured to control the on-off of the third cryogenic working gas transmission pipeline.

In one embodiment, the hydrogen liquefaction system further comprises a first liquid hydrogen cryogenic transmission pipeline 35 and a second liquid hydrogen cryogenic transmission pipeline 37, the first outlet of the hydrogen liquefaction unit 200 is communicated with the first inlet of the liquid hydrogen cryogenic container 36 via the first liquid hydrogen cryogenic transmission pipeline 35, and the fourth outlet of the hydrogen liquefaction unit 200 is communicated with the second inlet of the liquid hydrogen cryogenic container 36 via the second liquid hydrogen cryogenic transmission pipeline 37.

In one embodiment, the hydrogen liquefaction system further comprises a 20K saturated hydrogen return pipeline via which a first outlet of the liquid hydrogen cryogenic container 36 is communicated with the second inlet of the hydrogen liquefaction unit 200. Specifically, in one embodiment, the hydrogen liquefaction system further comprises a regulating valve 39, which is disposed on the 20K saturated hydrogen return pipeline and is configured to control the on-off of the 20K saturated hydrogen return pipeline.

In one embodiment, the hydrogen liquefaction system further comprises a feed hydrogen transmission pipeline 13 connected to a third inlet of the hydrogen liquefaction unit 200. Further, the feed hydrogen transmission pipeline 13 is provided with a feed hydrogen transmission pipeline on-off valve 14 for controlling the on-off of the feed hydrogen transmission pipeline 13.

In one embodiment, the hydrogen liquefaction system further comprises a first throttle valve 33 and a second throttle valve 38. The first throttle valve 33 is disposed on a supply pipeline from the seventh cryogenic heat exchanger 32 to the first inlet of the liquid hydrogen cryogenic container 36. The first throttle valve 33 is configured to adiabatically throttle the high-pressure hydrogen gas transmitted by the seventh cryogenic heat exchanger 32 to generate liquid hydrogen. The second throttle valve 38 is disposed on a supply pipeline from the seventh cryogenic heat exchanger 32 to a second inlet of the liquid hydrogen cryogenic container 36, and is configured to adiabatically throttle the raw hydrogen gas transmitted by the seventh cryogenic heat exchanger 32 to generate liquid hydrogen.

In one embodiment, the hydrogen liquefaction system further comprises a first rapid cooling pipeline 41, which is connected to the heat exchanger assembly to accelerate the cooling rate of the heat exchanger assembly. Specifically, an inlet of the first rapid cooling pipeline 41 is provided on a supply pipeline from the sixth cryogenic heat exchanger 31 to the seventh cryogenic heat exchanger 32, and an outlet of the first rapid cooling pipeline 41 is provided on a return pipeline from the first outlet of the liquid hydrogen cryogenic container 36 to the seventh cryogenic heat exchanger 32.

In one embodiment, the hydrogen liquefaction system further comprises a second rapid cooling pipeline 43 connected to the heat exchanger assembly and the liquid hydrogen cryogenic container 36 to accelerate the cooling rate of the heat exchanger assembly and the liquid hydrogen cryogenic container 36. Specifically, the inlet of the second rapid cooling pipeline 43 is connected to the second outlet of the liquid hydrogen cryogenic container 36, and the outlet of the second rapid cooling pipeline 43 is connected to the pipeline from the third cryogenic heat exchanger 25 to the third inlet of the first cryogenic heat exchanger 15 returning to the ambient temperature compressor assembly 1.

In one embodiment, the hydrogen liquefaction system further comprises a first rapid pipeline regulating valve 40 and a second rapid pipeline regulating valve 42, wherein the first rapid pipeline regulating valve 40 is disposed on the first rapid pipeline 41, the first rapid pipeline regulating valve 40 is configured to control the on-off of the first rapid pipeline 41, the second rapid pipeline regulating valve 42 is disposed on the second rapid pipeline 43, and the second rapid pipeline regulating valve 42 is configured to control the on-off of the second rapid pipeline 43.

In one embodiment, the hydrogen liquefaction system further comprises a first absorber 22 and a second absorber23, the first absorber22 and the second absorber23 are arranged in parallel on the supply pipeline from the second cryogenic heat exchanger 20 to the third cryogenic heat exchanger 25, and the first absorber22 and the second absorber23 are configured to remove impurities in the feed hydrogen gas. In addition, the first absorber22 and the second absorber23 can realize on-line regeneration and mutual switching. When the first absorber22 works, the second absorber23 can regenerate on-line, and when the first absorber22 cannot continue to adsorb impurities and switches to the second absorber23, the first absorber22 can perform on-line regeneration.

In one embodiment, the hydrogen liquefaction system further comprises a third absorber24, which is disposed on the supply pipeline from the first cryogenic heat exchanger 15 to the second cryogenic heat exchanger 20, and is configured to remove impurities in the high-pressure hydrogen gas.

In one embodiment, the liquid hydrogen cryogenic container 36 can be a vertical, horizontal or spherical liquid hydrogen storage tank. In one embodiment, the liquid hydrogen cryogenic container 36 is provided with a heater, which can heat the liquid hydrogen stored in the liquid hydrogen cryogenic container 36 to realize the conversion of the liquid hydrogen to 20K saturated hydrogen, so as to effectively control the return flow of the 20K saturated hydrogen.

Furthermore, the hydrogen liquefaction system further comprises a gas-liquid separator disposed on a supply pipeline from the first outlet of the hydrogen liquefaction unit 200 to the first inlet of the liquid hydrogen cryogenic container 36. In this way, the liquid hydrogen separated by the gas-liquid separator can be further transmitted to the liquid hydrogen cryogenic container 36, while the unliquefied hydrogen separated by the gas-liquid separator can be returned to the hydrogen liquefaction unit 200 for further cooling liquefaction, thus avoiding the possibility of gas-liquid mixing in the hydrogen liquefaction unit 200 and effectively improving the heat exchange efficiency. Specifically the gas-liquid separator is provided on a supply pipeline from the seventh cryogenic heat exchanger 32 to the first inlet of the liquid hydrogen cryogenic container 36.

The overall working process of the above hydrogen liquefaction system is as follows:

The ambient temperature compressor assembly 1 provides a power source for a hydrogen liquefaction system to realize the pressurization process of hydrogen from low-pressure to medium-pressure and from medium-pressure to high-pressure. The gas management subsystem 10 effectively controls the opening degrees of the first valve 2, the second valve 3, the third valve 4, and the fourth valve 5 via a control program, thereby stabilizing the hydrogen pressure of the high-pressure gas pipeline 7, the medium-pressure gas pipeline 8, and the low-pressure gas pipeline 9 between the ambient temperature compressor assembly 1 and the hydrogen liquefaction unit 200.

When the purity of hydrogen gas in the hydrogen liquefaction system reaches the requirement, the cryogenic working gas precooling subsystem 18 is started, and the feed hydrogen and the high-pressure hydrogen gas output from the ambient temperature compressor assembly 1 are precooled and cooled by the cryogenic working gas precooling subsystem 18. When the outlet temperature of the high-pressure gas pipeline 7 of the first cryogenic heat exchanger 15 reaches the cryogenic working gas temperature, the first-stage precooling of the feed hydrogen and the high-pressure hydrogen gas is completed.

The primary hydrogen turbo-expander 11 and the secondary hydrogen turbo-expander 12 are opened by opening the turbo-path regulating valve 26. Part of the high-pressure hydrogen gas after the first stage precooling passes via the fourth cryogenic heat exchanger 28, the fifth cryogenic heat exchanger 29 and the sixth cryogenic heat exchanger 31 along the way via the high-pressure gas pipeline 7, and the other part of the high-pressure hydrogen gas enters the primary hydrogen turbo-expander 11 and the secondary hydrogen turbo-expander 12 via the turbo-path regulating valve 26 for expansion refrigeration and cooling, and returns to the medium-pressure gas pipeline 8.

During the cooling phase of the hydrogen liquefaction unit 200, the first and second rapid cooling pipeline regulating valves 40 and 42 are opened to conduct the first and second rapid cooling pipelines 41 and 43 to accelerate the cooling rate of each heat exchanger and liquid hydrogen cryogenic container 36 comprised in the heat exchanger assembly.

The first and second rapid pipeline regulating valves 40 and 42 are closed to disconnect the first and second rapid pipelines 41 and 43. The high-pressure hydrogen gas transmitted by the seventh cryogenic heat exchanger 32 is throttled by the first throttle valve 33, and the liquid nitrogen generated by throttling and cooling is stored in the liquid hydrogen cryogenic container 36 via the first liquid hydrogen cryogenic transmission pipeline 35. The 20K saturated hydrogen passes via the 20K saturated hydrogen return pipeline, passes via the seventh cryogenic heat exchanger 32, the sixth cryogenic heat exchanger 31, the fifth cryogenic heat exchanger 29, the fourth cryogenic heat exchanger 28, the third cryogenic heat exchanger 25 and the first cryogenic heat exchanger 15 in sequence, and flows back to the second inlet (low-pressure suction end) of the ambient temperature compressor assembly 1 via the low-pressure gas pipeline 9 to complete one whole cycle.

At the same time, the feed hydrogen passes via the first cryogenic heat exchanger 15, the second cryogenic heat exchanger 20, the third cryogenic heat exchanger 25, the fourth cryogenic heat exchanger 28, the fifth cryogenic heat exchanger 29, the sixth cryogenic heat exchanger 31, and the seventh cryogenic heat exchanger 32 in sequence for heat exchange and cooling, and passes via the second throttle valve 38 for throttling and cooling, and passes via the continuous normal parahydrogen conversion corresponding to the normal parahydrogen catalyst filled in the heat exchanger or the adiabatic normal parahydrogen conversion of the subsequent normal parahydrogen converters to finally become high-purity liquid hydrogen with a parahydrogen concentration of not less than 99%, and then enters the liquid hydrogen cryogenic container 36 for storage via the second liquid hydrogen cryogenic transmission pipeline 37.

Compared with the related art, the hydrogen liquefaction system provided by the present disclosure adopts a combination of the Claude cycle or the Collins cycle with cryogenic working gas precooling and hydrogen liquefaction cycle with ortho-parahydrogen continuous or adiabatic conversion, and adopts a rapid cooling pipeline at the same time. The advantages of the present disclosure are as follows:
1). The hydrogen liquefaction system provided by the present disclosure can generate liquid hydrogen together with the hydrogen liquefaction pipeline of the hydrogen liquefaction system by arranging a hydrogen circulating pipeline and taking hydrogen as a circulating working gas, so that the hydrogen liquefaction capacity of the hydrogen liquefaction system can be greatly improved and the production requirement of more than 5 tons per day of hydrogen liquefaction capacity can be met.
2) All the heat exchangers in the cold box 34 are gas, and the possibility of gas-liquid mixing in the seventh cryogenic heat exchanger 32 can be avoided, thus effectively improving the heat exchange efficiency.
3) The first rapid pipeline can realize the first rapid of all levels of heat exchangers in the cold box 34 and the liquid hydrogen cryogenic container 36, effectively reducing the system energy consumption and improving the operation economy.
4) The recovered hydrogen does not need to be re-compressed, and the compressor power consumption caused by the recovered hydrogen is not increased, which can greatly reduce the energy consumption required for hydrogen liquefaction and reduce the cost, and at the same time, high-purity liquid hydrogen with parahydrogen concentration not less than 99% can be obtained.

The technical features of the above embodiments can be arbitrarily combined, and all possible combinations of the technical features of the above embodiments have not been described in order to make the description concise. However, as long as there is no contradiction in the combinations of these technical features, they should be considered as the scope described in this specification.

The above embodiments are expressed only as preferred embodiments of the present disclosure and the description thereof is more specific and detailed but cannot therefore be construed as limiting the scope of the present disclosure patent. It should be noted that a number of modifications and modifications can be made to one of ordinary skill in the art without departing from the concept of the present disclosure, which falls within the scope of the present disclosure. Therefore, the scope of protection of the present disclosure patent shall be subject to the appended claims.

## Claims

1. A hydrogen liquefaction system, comprising: an ambient temperature compressor assembly (1), a hydrogen liquefaction unit (200) and a liquid hydrogen cryogenic container (36), wherein
the outlet of the ambient temperature compressor assembly (1) is communicated with a first inlet of the hydrogen liquefaction unit (200) via a high-pressure gas pipeline (7);
a first outlet of the hydrogen liquefaction unit (200) is communicated with a first inlet of the liquid hydrogen cryogenic container (36);
the first outlet of the hydrogen liquefaction unit (200) is communicated with the first inlet of the liquid hydrogen cryogenic container (36);
the first outlet of the liquid hydrogen cryogenic container (36) is communicated with a second inlet of the liquid hydrogen cryogenic container (200);
a second outlet of the hydrogen liquefaction unit (200) is communicated with a first inlet of the ambient temperature compressor assembly (1) via a medium-pressure gas pipeline (8);
a third outlet of the hydrogen liquefaction unit (200) is communicated with a second inlet of the ambient temperature compressor assembly (1) via a low-pressure gas pipeline (9);
the high-pressure gas pipeline (7), the medium-pressure gas pipeline (8) and the low-pressure gas pipeline (9) are passed through the liquid hydrogen liquefaction unit (200);
a third inlet of the hydrogen liquefaction unit (200) is for inflow of raw hydrogen;
a fourth outlet of the hydrogen liquefaction unit (200) is communicated with a second inlet of the liquid hydrogen cryogenic container (36), and
a fourth outlet of the hydrogen liquefaction unit (200) is for outflow of liquid hydrogen;
wherein the ambient temperature compressor assembly (1) provides a power source for the hydrogen liquefaction system to realize the pressurization process of hydrogen from low-pressure to medium-pressure and from medium-pressure to high-pressure;
the hydrogen liquefaction unit (200) is configured to cool and liquefy the high-pressure hydrogen gas output from the ambient temperature compressor assembly (1) into liquid hydrogen;
the liquid hydrogen output from the first outlet of the hydrogen liquefaction unit (200) can enter the liquid hydrogen cryogenic container (36) via the first inlet of the liquid hydrogen cryogenic container (36) for storage;
the 20K saturated hydrogen can flow into the second inlet of the hydrogen liquefaction unit (200) from the first outlet of the liquid hydrogen cryogenic container (36), and then flow into the second inlet of the ambient temperature compressor assembly (1) from the third outlet of the hydrogen liquefaction unit (200) via the low-pressure gas pipeline (9) to complete whole cycle; the feedstock hydrogen can enter the hydrogen liquefaction unit (200) from the third inlet of the hydrogen liquefaction unit (200), then be cooled by the hydrogen liquefaction unit (200) to generate liquid hydrogen, then flow out from the fourth outlet of the hydrogen liquefaction unit (200) and enter the liquid hydrogen cryogenic container (36) via the second inlet of the liquid hydrogen cryogenic container (36) for storage.

2. The hydrogen liquefaction system according to claim 1, further comprising a gas management subsystem (10) disposed between the ambient temperature compressor assembly (1) and the hydrogen liquefaction unit (200), the gas management subsystem (10) comprising a pneumatic regulating valve assembly in parallel with the ambient temperature compressor assembly (1).

3. The hydrogen liquefaction system according to claim 1, wherein the ambient temperature compressor assembly (1) is a single single-stage compressor or a single multi-stage compressor or two single-stage compressors in series or a plurality of single-stage compressors combined in series and parallel.

4. The hydrogen liquefaction system according to claim 1, wherein the hydrogen liquefaction unit (200) comprises a combination of a heat exchanger assembly and a turbo-expander assembly.

5. The hydrogen liquefaction system according to claim 4, wherein the heat exchanger assembly is filled with ortho-parahydrogen catalyst, or the heat exchanger assembly is connected with an attached ortho-parahydrogen converter.

6. The hydrogen liquefaction system according to claim 4, wherein the hydrogen liquefaction unit (200) further comprises a cryogenic working gas precooling subsystem (18) connected to the heat exchanger assembly.

7. The hydrogen liquefaction system according to claim 4, wherein the hydrogen liquefaction unit (200) is a hydrogen liquefaction unit based on a Claude cycle, the heat exchanger assembly comprises a first cryogenic heat exchanger (15), a second cryogenic heat exchanger (20), a third cryogenic heat exchanger (25), a fourth cryogenic heat exchanger (28), a fifth cryogenic heat exchanger (29), a sixth cryogenic heat exchanger (31) and a seventh cryogenic heat exchanger (32) sequentially connected in parallel, the fifth cryogenic heat exchanger (29) is provided with a cryogenic working gas inlet and a cryogenic working gas outlet, the turbo-expander assembly comprises a primary hydrogen turbo-expander (11) and a secondary hydrogen turbo-expander (12),the inlet of the primary hydrogen turbo-expander (11) is disposed on a supply pipeline from the third cryogenic heat exchanger (25) to the fourth cryogenic heat exchanger (28), the outlet of the primary hydrogen turbo-expander (11) is communicated with the cryogenic working gas inlet of the fifth cryogenic heat exchanger (29), the inlet of the secondary hydrogen turbo-expander (12) is communicated with the cryogenic working gas outlet of the fifth cryogenic heat exchanger (29), and the outlet of the secondary hydrogen turbo-expander (12) is disposed on the return pipeline from the sixth cryogenic heat exchanger (31) to the second inlet of the ambient temperature compressor assembly (1).

8. The hydrogen liquefaction system according to claim 4, wherein the hydrogen liquefaction unit (200) is a hydrogen liquefaction unit based on a Collins cycle, the heat exchanger assembly comprises a first cryogenic heat exchanger (15), a second cryogenic heat exchanger (20), a third cryogenic heat exchanger (25), a fourth cryogenic heat exchanger (28), a fifth cryogenic heat exchanger (29), a sixth cryogenic heat exchanger (31) and a seventh cryogenic heat exchanger (32) sequentially connected in parallel, the turbo-expander assembly comprises a primary hydrogen turbo-expander (11) and a secondary hydrogen turbo-expander (12),the inlet of the primary hydrogen turbo-expander (11) is disposed on a supply pipeline from the third cryogenic heat exchanger (25) to the fourth cryogenic heat exchanger (28),the outlet of the primary hydrogen turbo-expander (11) is disposed on a return pipeline from the fifth cryogenic heat exchanger (29) to the fourth cryogenic heat exchanger (28) returned to the second inlet of the ambient temperature compressor assembly (1), the inlet of the hydrogen turbo-expander (12) is disposed on a supply pipeline from the fifth cryogenic heat exchanger (29) to the sixth cryogenic heat exchanger (31), and the outlet of the secondary hydrogen turbo-expander (12) is disposed on a return pipeline from the sixth cryogenic heat exchanger (31) to the second inlet of the ambient temperature compressor assembly (1).

9. The hydrogen liquefaction system according to claim 7, further comprising a first rapid cooling pipeline (41) connected to the heat exchanger assembly and/or a second rapid cooling pipeline (43) connected to the heat exchanger assembly and the liquid hydrogen cryogenic container (36).

10. The hydrogen liquefaction system according to claim 1, wherein the liquid hydrogen cryogenic container (36) is provided with a heater.
